(19) Europäisches Patentamt
European Patent Office
Office européen des brevets

(11) Publication number: **0 094 091**
**B1**

(12) # EUROPEAN PATENT SPECIFICATION

(45) Date of publication of patent specification: **16.07.86**

(51) Int. Cl.[4]: **C 08 L 81/02**, C 08 K 5/34

(21) Application number: **83104652.9**

(22) Date of filing: **11.05.83**

(54) **Stabilized poly(arylene sulfide) composition, process for melt extruding such composition and use of triazole stabilizers in poly(arylene sulfide) resins.**

(30) Priority: **11.05.82 US 377213**

(43) Date of publication of application:
**16.11.83 Bulletin 83/46**

(45) Publication of the grant of the patent:
**16.07.86 Bulletin 86/29**

(84) Designated Contracting States:
**AT BE CH DE FR GB IT LI LU NL SE**

(56) References cited:
**DE-B-1 210 179**
**US-A-3 998 767**
**US-A-4 132 704**

(73) Proprietor: **PHILLIPS PETROLEUM COMPANY**
**5th and Keeler**
**Bartlesville Oklahoma 74004 (US)**

(72) Inventor: **Reed, Jerry Olin**
**4712 S.E. Clearview Drive**
**Bartlesville Oklahoma 74003 (US)**
Inventor: **Mathis, Ronald Dean**
**4601 S.E. Barlow Drive**
**Bartlesville Oklahoma 74003 (US)**

(74) Representative: **Dost, Wolfgang, Dr.rer.nat., Dipl.-Chem. et al**
**Patent- und Rechtsanwälte Bardehle-Pagenberg-Dost-Altenburg & Partner Postfach 86 06 20**
**D-8000 München 86 (DE)**

**EP 0 094 091 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Field of invention

This invention relates to resin compositions comprising a poly(arylene sulfide) resin and a stabiliser. Further, this invention relates to improving the characteristics of arylene sulfide polymer compositions. In accordance with another aspect, this invention relates to the use of cure retarders in poly(arylene sulfide) resin compositions. In accordance with another aspect, this invention relates to the use of cure retarders or heat stabilizers in poly(arylene sulfide) resin compositions to prevent cross-linking or substantial alteration of physical properties during heating. In accordance with a further aspect, this invention relates to the use of selected stabilizers to improve the heat stability of arylene sulfide polymer compositions, especially poly(p-phenylene sulfide) resins. In accordance with a further aspect, this invention relates to improving the heat stability of fiber and film grade poly(p-phenylene sulfide) resins by the addition of a cure retarder or stabilizer. In accordance with still another aspect, this invention relates to the use of stabilizers that reduce gel formation of arylene sulfide resins when subjected to heating while processing, for example, during the melt spinning of arylene sulfide resin compositions to produce fibers.

Background of the invention

In applications, such as in the production of fibers and films from arylene sulfide polymers, it is desirable that the melt flow and molecular weight of the polymer remain substantially unchanged during processing of the polymer. Various procedures have been utilized to stabilize arylene sulfide polymers against changes in physical properties during processing. It has now been discovered that arylene sulfide polymers can be treated in a manner such that the polymer properties remain substantially unchanged during heating of the polymer by incorporating into the polymer a cure retarder.

Accordingly, an object of this invention is to provide a process for improving the heat stability of arylene sulfide polymers.

A further object of this invention is to provide an improved process for stabilizing the physical properties, especially melt flow and molecular weight, of arylene sulfide resins during processing.

A further object of this invention is to provide arylene sulfide polymer resins having improved physical properties with respect to melt flow and molecular weight, in particular.

A further object of this invention is to provide phenylene sulfide polymer resins exhibiting improved heat stability.

Other objects, aspects, and the several advantages of the invention will be apparent to those skilled in the art upon a study of the specification and the appended claims.

Summary of the invention

In accordance with the invention a resin composition comprising a poly(arylene sulfide) and a stabilizer is provided, which composition is characterized in that said stabilizer is at least one of said 3-substituted triazole having the formula

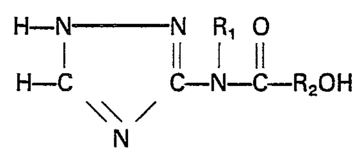

wherein $R_1$ is hydrogen or a hydrocarbyl radical having from 1 to 10 carbon atoms, and $R_2$ is an arylene or substituted arylene radical having from 6 to 10 carbon atoms.

Further preferred embodiments of the inventive composition are set forth in claims 2 to 6.

According to a further embodiment of the invention, the heat stability of arylene sulfide resins is improved by the addition of an effective stabilizing amount of at least one of said 3-substituted triazoles which retards curing and cross-linking of the resin during heating.

In accordance with another embodiment of the invention, the heat stability of poly(arylene sulfide) resins, for example, poly(p-phenylene sulfide) resins, is improved by incorporating therein prior to heating to processing conditions an effective stabilizing amount of at least one of said 3-substituted triazoles to retard curing and cross-linking during heating and processing of the polymer.

In accordance with still another embodiment of the invention, the heat stability of fiber and film grade poly(p-phenylene sulfide) polymers is improved by the addition of at least one of said 3-substituted-1,2,4-triazoles.

In accordance with a further specific embodiment of the invention, the addition of at least one of said 3-substituted-1,2,4-triazoles to arylene sulfide polymer resin compositions reduces the amount of gel formed during melt extrusion of the polymer composition, thereby minimizing plugging of filters and spinnerets which ordinarily causes premature shut-downs and additional clean-up operations.

Description of the preferred embodiments

The invention is applicable for use with any normally solid, heat curable, high molecular weight

arylene sulfide polymer that can be formed into fibers and films. Arylene sulfide polymers which can be employed in the process of this invention include arylene sulfide polymers which have a melt flow of preferably at least about 20 and more preferably within the range of 50 to 400 and higher (determined by the method of ASTM D 1238-70, modified to a temperature of 316°C using a 5-kg weight, the value being expressed as g/10 min). Thus, the arylene sulfide polymers can be linear, branched or lightly cross-linked. Although the method by which the polymers of this description are produced is not critical, preferably the polymer employed in the process is prepared by use of polyhalo aromatic compounds, alkali metal sulfides, and organic amides. The preferred type polymer employed for use in film and fiber applications is prepared by use of a p-dihalobenzene, an alkali metal sulfide, an organic amide, and an alkali metal carboxylate as in US—A—3,919,177.

The 3-substituted triazole compounds used as stabilizers according to the invention, are represented by the following structure

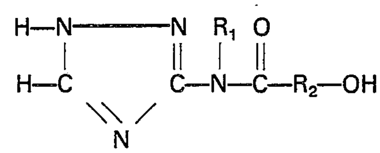

wherein $R_1$ is H or a hydrocarbyl radical having 1 to about 10 carbon atoms and $R_2$ is an aryl or substituted arylene, for example phenylene, radical having 6 to about 10 carbon atoms.

Representative compounds of the type described above include 3 - salicyloylamido - 1,2,4 - triazole; 3 - (5 - hydroxy salicyloylamido) 1,2,4-triazole; 3 - (3 - chloro salicyloylamido) - 1,2,4 - triazole; 3 - (5 - chloro salicyloylamido) - 1,2,4 - triazole; 3 - (5 - methyl salicyloylamido) - 1,2,4 - triaozle; 3 - (5 - methoxy salicyloylamido) - 1,2,4 - triazole; and mixtures thereof.

The amount of stabilizer (cure retarder) incorporated into the arylene sulfide resin will be a finite, effective amount sufficient to improve the heat stability of the polymer. Preferably, the cure retardant additives of this invention are employed in an amount within the range of 0.1 to 5, more preferably 0.5 to 2 weight percent based on the weight of the arylene sulfide polymer.

In addition to the cure retardant additives of this invention, the compositions can contain other ingredients conventionally employed in arylene sulfide polymer compositions formed into fibers and films. For instance, fillers such as zinc oxide, pigments, resins, and/or plasticizers can be present so long as the particle size is small enough to permit passage of the polymer through the processing equipment during formation of fibers and films.

The cure retarder can be incorporated into the arylene sulfide polymer at any stage of processing, preferably prior to being subjected to elevated temperature, or at such times as it is desired to retain melt flow stability. In one practical application of the invention, the cure retarders are incorporated into the arylene sulfide resin, such as a poly(p-phenylene sulfide) resin, prior to melt spinning to form fibers or other formed articles so that gel formation is reduced during melt spinning and problems with filter and spinneret plugging is reduced or obviated.

The processes of this invention of incorporating the cure retarder into the resin can be conducted batch-wise or continuously.

The following examples are intended to illustrate the compositions and process of the invention.

Example I

This example describes the procedure used to prepare and test samples disclosed herein. The example is also a control giving the results of poly(p-phenylene sulfide) polymer without an additive. About 10 grams of polyphenylene sulfide powder (Mw about 28,000, melt flow 324 grams per 10 mins using 5-kg wt. at 316°C produced by the method described in US—A—3,919,177) was treated with about 40 milliliters acetone solvent and dried at ambient room temperature for about 48 hours. The dried powder was compression molded into disc specimens, 2.5 grams each being 2.54 cm (1 inch) in diameter×0.476 mm (0.1875 inches) thick. The molding procedure was 69 MPa (gauge) (10,000 psig) for 5 seconds at about 24°C, 69 MPa (gauge) (10,000 psig) for 2.5 minutes at 325°C, and cooling under pressure to below 121°C before removal. The molded disc specimens were evaluated by determining storage modulus as a function of time. Storage modulus is very sensitive to cross-linking and increases in molecular weight and as such is useful in determining heat stability of polyphenylene sulfide. The test is carried out on a Rheometric Dynamic Spectrometer (RDS), which comprises two 2.54 cm (1 inch) diameter stainless steel plates, the bottom plate connected to a sensing device and the top plate able to oscillate horizontally. The sample to be tested is placed between the plates which have been preheated to 300°C (572°F). As the sample begins to melt, it is squeezed to a thickness of 2 mm. Excess material is removed and the sample allowed to thermally equilibrate for 3 minutes. The top plate is then oscillated at 10 radians per second with 10 percent strain. Readings are recorded every minute for 20 minutes. In this manner the RDS storage modulus after 6 minutes was determined as 0.0189 $N/cm^2$ (1890 dynes per square centimeter). After 20 minutes RDS storage modulus was 0.04960 $N/cm^2$ (4960 dynes per square centimeter). Thus, the percent difference in storage modulus between 6 and 20 minutes was 162 percent.

Example II

This is a control run demonstrating the ineffectiveness of some known stabilizers to retard curing when used in polyphenylene sulfide polymers. The procedure for sample preparation and evaluation described in Example I was repeated except that 0.1 gram of bis(4 - t - butyl - 3 - hydroxy - 2,6 - dimethylbenzyl)dithiol terephthalate dissolved in 40 $cm^3$ (milliliters) of acetone was added to the polyphenylene sulfide powder before the initial drying. The additive and polyphenylene sulfide powder mixture was periodically stirred during a 48 hour ambient run temperature drying period. The procedure was repeated with another additive solution, namely, 0.1 gram of N,N′ - diphenyl - p - phenylenediamine dissolved in 40 $cm^3$ (milliliters) of acetone. The testing results indicate neither of the known stabilizer additives was effective in reducing gel formation (cross-linking or increased molecular weight) as determined by RDS storage modulus. The terephthalate additive had a storage modulus of 0.0203 $N/cm^2$ (2030 $dynes/cm^2$) at 6 minutes, 0.0571 $N/cm^2$ (5710 $dynes/cm^2$) at 20 minutes with a 181 percent change. The amine stabilizer additive had a storage modulus of 0.0205 $N/cm^2$ (2050 $dynes/cm^2$) at 6 minutes, 0.054 (5400 $dynes/cm^2$) at 20 minutes with a 163 percent change.

Example III

This is an inventive run demonstrating the effectiveness of 3-substituted triazoles in retarding the cure of polyphenylene sulfide polymers. The procedure for sample preparation and evaluation described in Example I was repeated except that 0.1 gram (1 weight percent) of 3 - salicyloylamido - 1,2,4 - triazole dissolved in 40 $cm^3$ (milliliters) of methyl alcohol was added to the polyphenylene sulfide powder before the initial drying. The additive and the polyphenylene sulfide powder mixture was periodically stirred during the 48 hour drying period. The effectiveness of the triazole as a stabilizer is shown in Table I. The 3-substituted triazole is very effective in retarding cure whereas other known stabilizers such as those listed are not effective in retarding cure.

TABLE I

Effect of an aminotriazole on the heat stability (storage modulus) of polyphenylene sulfide

| | | RDS Storage modulus, $N/cm^2$ ($dynes/cm^2$) | | |
|---|---|---|---|---|
| Example No. | 1 wt.% Additive | 6 min. | 20 mins. | % Difference |
| Controls: | | | | |
| I | No additive | 0.0189 (1890) | 0.0496 (4960) | 162 |
| II | Bis(4-t-butyl-3-hydroxy-2,6-dimethylbenzyl)dithiol terephthalate[a] | 0.0203 (2030) | 0.0571 (5710) | 181 |
| II | N,N′-Diphenyl-p-phenylenediamine | 0.0205 (2050) | (0.054) 5400 | 163 |
| Invention: | | | | |
| III | 3-Salicyloylamido-1,2,4-triazole[c] | (0.0132) 1320 | 0.0195 (1950) | 48 |

[a] White powder, m.p. 218—220°C.
[c] White powder, m.p. near 300°C.

**Claims**

1. A resin composition comprising a poly(arylene sulfide) resin and a stabilizer characterized in that said stabilizer is at least one 3-substituted triazole having the formula

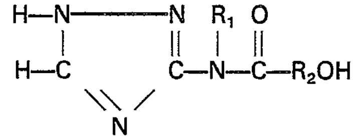

wherein $R_1$ is hydrogen or a hydrocarbyl radical having from 1 to 10 carbon atoms and $R_2$ is an arylene or substituted arylene radical having from 6 to 10 carbon atoms.

2. The composition of claim 1 characterized in that said stabilizer is present in an amount from 0.1 to 5 percent by weight based on the weight of said poly(arylene sulfide) resin.

3. The resin composition of claim 1 or 2 characterized in that said stabilizer is present in an amount from 0.2 to 2 weight percent based on the weight of said poly(arylene sulfide) resin.

4. The composition of any of claims 1 to 3 characterized in that said poly(arylene sulfide) is a poly(p-phenylene sulfide).

5. The composition of claim 4 characterized in that said poly(p-phenylene sulfide) has a melt flow from 50 to 400 g/10 min.

6. The composition of claim 5 characterized in that said 3-substituted triazole is 3 - salicyloylamido - 1,2,4 - triazole.

7. A process for reducing gel formation during melt extrusion of poly(arylene sulfide) resins characterized by incorporating into said resin at least one 3-substituted triazole as defined in claim 1.

8. The process of claim 7 characterized by using said 3-substituted triazole under conditions as defined in any one of claims 2 to 6.

9. The use of 3-substituted triazoles as defined in claim 1 in poly(arylene sulfide) resins for improving the heat stability thereof.

10. The use of 3-substituted triazoles as in claim 9 under conditions as defined in any one of claims 2 to 6.

11. The use of a composition of any of claims 1 to 7 for forming articles of manufacture, in particular fibers or films.

**Patentansprüche**

1. Harzzusammensetzung aus einem Poly(arylensulfide)harz und einem Stabilisator, dadurch gekennzeichnet, daß der Stabilisator mindestens ein 3-substituiertes Triazol der Formel

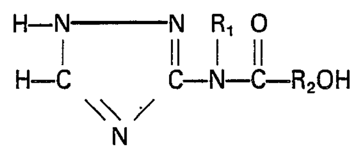

ist, worin $R_1$ Wasserstoff oder ein Kohlenwasserstoffradikal mit 1 bis 10 Kohlenstoffatomen und $R_2$ ein Arylen- oder substituiertes Arylenradikal mit 6 bis 10 Kohlenstoffatomen bedeutet.

2. Zusammensetzung nach Anspruch 1, dadurch gekennzeichnet, daß der Stabilisator in einer Menge von 0,1 bis 5 Gew.-%, bezogen auf das Gewicht des Poly(arylensulfid)harzes vorliegt.

3. Zusammensetzung nach Anspruch 1 oder 2, dadurch gekennzeichnet, daß der Stabilisator in einer Menge von 0,2 bis 2 Gew.-% bezogen auf das Gewicht des Poly(arylensulfid)harzes, vorliegt.

4. Zusammensetzung nach einem der Ansprüche 1 bis 3, dadurch gekennzeichnet, daß das Poly(arylensulfid) ein Poly(p-phenylensulfid) ist.

5. Zusammensetzung nach Anspruch 4, dadurch gekennzeichnet, daß das Poly(p-phenylensulfid) einen Schmelzindex von 50 bis 500 g/10 min hat.

6. Zusammensetzung nach Anspruch 5, dadurch gekennzeichnet, daß das 3-substituierte Triazol ein 3 - Salicyloylamido - 1,2,4 - triazol ist.

7. Verfahren zur Herabsetzung der Gelbildung während des Schmelzextrudierens von Poly(arylensulfid)harzen, gekennzeichnet durch die Einverleibung von mindestens einem in Anspruch 1 definierten 3-substituierten Triazol in das Harz.

8. Verfahren nach Anspruch 7, gekennzeichnet durch die Verwendung des 3-substituierten Triazols unter den in irgendeinem der Ansprüche 2 bis 6 definierten Bedingungen.

9. Verwendung von in Anspruch 1 definierten 3-substituierten Triazolen in Poly(arylensulfid)-harzen zur Verbesserung von deren Wärmestabilität.

10. Verwendung von 3-substituierten Triazolen gemäß Anspruch 9 unter den in irgendeinem der Ansprüche 2 bis 6 definierten Bedingungen.

11. Verwendung einer Zusammensetzung nach einem der Ansprüche 1 bis 7 zur Bildung von fabrikmäßig hergestellten Gegenständen, insbesondere Fasern oder Filmen.

**Revendications**

1. Composition de résine comprenant une résine de poly(sulfure d'arylène) et un stabilisant, caractérisée en ce que ce stabilisant est au moins un triazole 3-substitué répondant à la formule

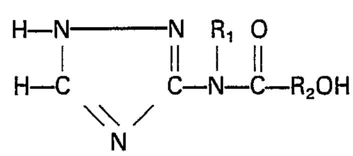

dans laquelle $R_1$ est l'hydrogène ou un radical hydrocarbyle ayant de 1 à 10 atomes de carbone et $R_2$ est un radical arylène ou arylène substitué ayant de 6 à 10 atomes de carbone.

2. Composition selon la revendication 1, caractérisée en ce que ce stabilisant est présent dans une proportion de 0,1 à 5% en poids par rapport au poids de cette résine de poly(sulfure d'arylène).

3. Composition de résine selon les revendication 1 ou 2, caractérisée en ce que ce stabilisant est présent dans une proportion de 0,2 à 2% en poids par rapport au poids de cette résine de poly(sulfure d'arylène).

4. Composition selon l'une quelconque des revendications 1 à 3, caractérisée en ce que ce poly(sulfure d'arylène) est un poly(sulfure de p-phénylène).

5. Composition selon la revendication 4, caractérisée en ce que ce poly(sulfure de p-phénylène) a un écoulement à l'état fondu de 50 à 400 g/10 minutes.

6. Composition selon la revendication 5, caractérisée en ce que ce triazole 3-substitué est du 3 - salicyloylamido - 1,2,4 - triazole.

7. Procédé pour réduire la formation de gel au cours de l'extrusion à l'état fondu de résines de poly(sulfure d'arylène), caractérisé en ce qu'on incorpore à cette résine au moins un triazole 3-substitué tel que défini dans la revendication 1.

8. Procédé selon la revendication 7, caractérisé en ce qu'on utilise ce triazole 3-substitué dans des conditions telles que définies dans l'une quelconque des revendications 2 à 6.

9. Utilisation de triazoles 3-substitués tels que définis dans la revendication 1, dans des résines de poly(sulfure d'arylène) pour améliorer leur stabilité thermique.

10. Utilisation de triazoles 3-substitués comme dans la revendication 9, dans des conditions telles que définies dans l'une quelconque des revendications 2 à 6.

11. Utilisation d'une composition selon l'une quelconque des revendications 1 à 7 pour former des articles manufacturés, en particulier des fibres et des pellicules.